# EUROPEAN PATENT APPLICATION

(11) **EP 2 661 143 A1**
(43) Date of publication of application: **06.11.2013**
(21) Application number: 11854315.6
(22) Date of filing: 30.08.2011
(51) Int. Cl.: H04W 76/02

(54) **PROCESSING METHOD AND SYSTEM FOR CONNECTION**

(30) Priority: 29.12.2010 CN 201010611930
(71) Applicant: ZTE Corporation, Shenzhen, Guangdong 518057 (CN)
(72) Inventor: ZHU, Li, Guangdong 518057 (CN)
(74) Representative: Mozzi, Matteo
(86) International application number: PCT/CN2011/079113
(87) International publication number: WO 2012/088914

(57) **Abstract**

The present invention provides a connection processing method and system. The method includes: establishing a secure connection between a Mobility Management Entity (MME) and/or Serving Gateway (S-GW) and a Home (Evolved) NodeB (H(e)NB); and protecting a connection between the MME and/or S-GW and the H(e)NB via the secure connection. The present invention increases the reliability and security of a data transmission mechanism of an H(e)NB system, overcomes the security defects of the H(e)NB system, and improves the security performance of the H(e)NB system.

## Description

### Technical Field

The present invention relates to the field of communications, and in particular to a connection processing method and system.

### Background

A Home NodeB (HNB) is used for providing 3rd Generation (3G) wireless coverage for 3G mobile phones in the home. The HNB is connected to existing residential broadband services, and includes the function of a standard Node B (one element of a 3G macro radio access network) and a radio resource management function of a standard Radio Network Controller (RNC).

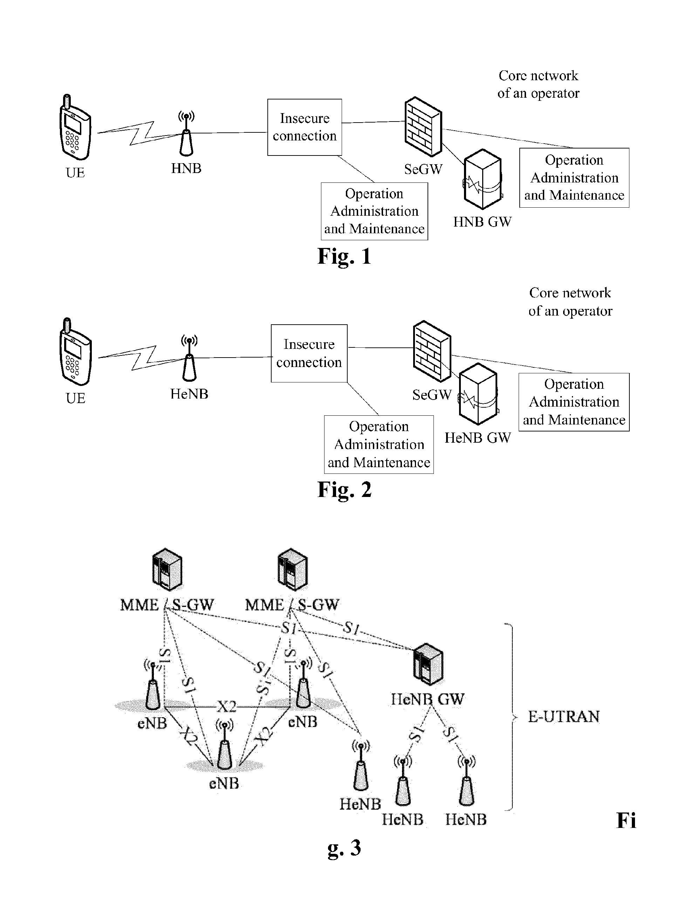

Fig. 1 shows a schematic diagram of the structure of an HNB system according to the related technology. As shown in Fig. 1, an interface between 3G Partnership Project (3GPP) User Equipment (UE) and the HNB is a backhaul and compatible air interface in a Universal Mobile Telecommunication System Radio Access Network (UTRAN). The HNB is accessed to a core network of an operator via a Security Gateway (SeGW), wherein the broadband Internet Protocol (IP) backhaul between the HNB and the SeGW may be unsafe. The information which is transmitted in this backhaul needs to be protected by a secure channel established between the HNB and the SeGW. The SeGW represents the core network of the operator to implement mutual authentication with the HNB. The HNB Gateway (HNB GW) and the SeGW are entities which are logically separated in the core network of the operator, and are used for access control of the UE of a Closed Subscriber Group (CSG). The Home (Evolved) Management System (H(e)MS) needs secure communications.

Fig. 2 shows a schematic diagram of the structure of a Home (Evolved) NodeB (H(e)NB, also HeNB) system according to the related technology. Compared with the HNB, the H(e)NB is an air interface for connecting the 3GPP UE and an Evolved UTRAN (E-UTRAN). A Home eNodeB Gateway (H(e)NB GW) is selectively deployed. If the H(e)NB GW is deployed, the SeGW and the H(e)NB GW can be combined together. If the SeGW and the H(e)NB GW are not combined, the interface between the SeGW and the H(e)NB GW can be protected by a Network Domain Security/Internet Protocol (NDS/IP).

The H(e)NB includes the HNB and the H(e)NB, and is a common name of the HNB and the H(e)NB.

Aiming at the security of the H(e)NB, the 3GPP TR 33.820 defines 27 threats. The 27 threats are grouped into 7 categories, which respectively are: hazards on the qualification certificate of the H(e)NB, physical attack on the H(e)NB, attack on the construction of the H(e)NB, attack on the protocol of the H(e)NB, attack on the core network (including the attack based on the location of the H(e)NB), attack on the data and identity privacy of users, and attack on radio resource and management.

Fig. 3 shows a schematic diagram of a EUTRAN architecture which includes the H(e)NB GW according to the related technology. As shown in Fig. 3, in this architecture, an S1 interface is set between a Mobility Management Entity (MME) and/or a Serving Gateway (S-GW) and the H(e)NB GW to transmit data of the control plane and the user plane. An S1 interface is set between the MME and/or S-GW and the H(e)NB to transmit data of the control plane and the user plane. An S1 interface is also set between the H(e)NB GW and the H(e)NB to transmit data of the control plane and the user plane.

In Fig. 3, the S1 interface between the MME and/or S-GW and the eNB is implemented with security protection by the existing security specifications. Different from the eNB, the H(e)NB is located in a more vulnerable environment, and thus is easier to be attacked. However, in the related technologies, the S1 interface between the MME and/or S-GW and the H(e)NB is not protected, such that the reliability and security of the data transmission mechanism of the H(e)NB cannot be guaranteed.

### Summary

The present invention provides a connection processing method and system, which solve the problem that the S1 interface between the H(e)NB and the MME and/or S-GW is not protected in the related technology.

The present invention provides a connection processing method according to one aspect.

The connection processing method according to the present invention includes: establishing a secure connection between an MME and/or S-GW and an H(e)NB; protecting a connection between the MME and/or S-GW and the H(e)NB via the secure connection.

Establishing the secure connection between the MME and/or S-GW and the H(e)NB includes: establishing the secure connection between the MME and/or S-GW and a Security Gateway (SeGW); establishing the secure connection between the SeGW and the H(e)NB.

Establishing the secure connection between the MME and/or S-GW and the SeGW includes: establishing the secure connection between the MME and/or S-GW and an H(e)NB Gateway (H(e)NB GW); establishing the secure connection between the H(e)NB GW and the SeGW.

The secure connection established between the MME and/or S-GW and the H(e)NB GW includes at least one of the following: an Internet Protocol Security (IPsec) tunnel, a Transport Layer Security (TLS) tunnel, a Network Domain Security/Internet Protocol (NDS/IP).

The secure connection established between the H(e)NB GW and the SeGW includes one of the following: an NDS/IP, combination of the H(e)NB GW and the SeGW.

When the secure connection established between the MME and/or S-GW and the SeGW does not pass through the H(e)NB GW, the method further includes: establishing the secure connection between the MME and/or S-GW and the H(e)NB GW; establishing the secure connection between the H(e)NB GW and the SeGW.

The secure connection which is established between the MME and/or S-GW and the SeGW, and does not pass through the H(e)NB GW includes at least one of the following: an IPsec tunnel, a TLS tunnel, an NDS/IP.

After establishing the secure connection between the SeGW and the H(e)NB, the method further includes: the SeGW and the H(e)NB performing authentication.

The secure connection includes at least one of the following: data source authentication, confidentiality protection, integrity protection, anti-replay protection.

The present invention provides a connection processing system according to another aspect.

The connection processing system according to the present invention includes an MME and/or S-GW and an H(e)NB, wherein the MME and/or S-GW includes: a first establishment module, configured to establish a secure connection with the H(e)NB; a first connection processing module, configured to protect a connection between the MME and/or S-GW and the H(e)NB via the secure connection; the H(e)NB includes: a second establishment module, configured to establish the secure connection with the MME and/or S-GW; a second connection processing module, configured to protect the connection between the MME and/or S-GW and the H(e)NB via the secure connection.

By establishing a secure connection between the MME and/or S-GW and the H(e)NB, and using the secure connection to implement data transmission, the present invention solves the problem that the S1 interface between the H(e)NB and the MME and/or S-GW is not protected in the related technology, thus increasing the reliability and security of the data transmission mechanism of the H(e)NB system, solving the security defects of the H(e)NB system, and improving the security performance of the H(e)NB system.

### Brief Description of the Drawings

Drawings, provided for further understanding of the present invention and forming a part of the specification, are used to explain the present invention together with embodiments of the present invention rather than to limit the present invention, wherein:
Fig. 1 shows a schematic diagram of the structure of an HNB system according to the related technology;
Fig. 2 shows a schematic diagram of the structure of a Home (Evolved) NodeB (H(e)NB) system according to the related technology;
Fig. 3 shows a schematic diagram of a EUTRAN architecture which includes the H(e)NB GW according to the related technology;
Fig. 4 shows a flowchart of a connection processing method according to an embodiment of the present invention;
Fig. 5 shows a flowchart of the connection processing method according to a preferred embodiment of the present invention;
Fig. 6 shows an interactive flowchart of the connection processing method according to a preferred embodiment 1 of the present invention;
Fig. 7 shows an interactive flowchart of the connection processing method according to a preferred embodiment 2 of the present invention;
Fig. 8 shows an interactive flowchart of the connection processing method according to a preferred embodiment 3 of the present invention;
Fig. 9 shows an interactive flowchart of the connection processing method according to a preferred embodiment 4 of the present invention;
Fig. 10 shows an interactive flowchart of the connection processing method according to a preferred embodiment 5 of the present invention;
Fig. 11 shows an interactive flowchart of the connection processing method according to a preferred embodiment 6 of the present invention;
Fig. 12 shows a structure diagram of a connection processing system according to an embodiment of the present invention.

### Detailed Description of the Embodiments

It should note that, the embodiments in the application and the characteristics of the embodiments can be mutually combined without conflict. The present invention is described below in details with reference to the drawings and embodiments.

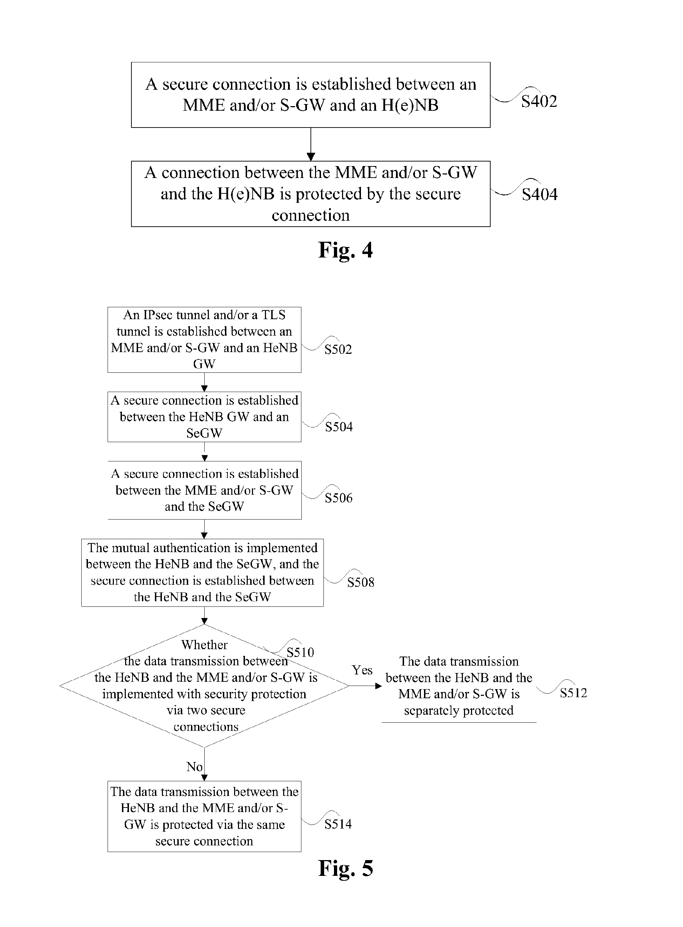

An embodiment of the present invention provides a connection processing method. Fig. 4 shows a flowchart of a connection processing method according to an embodiment of the present invention. As shown in Fig. 4, the method includes the following Steps S402-S404.

Step S402, a secure connection is established between an MME and/or S-GW and an H(e)NB.

Step S404, a connection between the MME and/or S-GW and the H(e)NB is protected via the secure connection.

The S1 interface between the H(e)NB and the MME and/or S-GW is not protected in the related technology, such that the reliability and security of the data transmission mechanism of the H(e)NB cannot be guaranteed. In the embodiment of the present invention, by establishing a secure connection between the H(e)NB and the MME and/or S-GW, and using the secure connection to implement connection processing, the reliability and security of the data transmission mechanism of the H(e)NB can be increased, the security defects of the H(e)NB system can be solved, and the security performance of the H(e)NB system can be improved.

Preferably, establishing the secure connection between the MME and/or S-GW and the H(e)NB includes that: a secure connection is established between the MME and/or S-GW and an SeGW; and a secure connection is established between the SeGW and the H(e)NB.

Preferably, establishing the secure connection between the MME and/or S-GW and the SeGW includes: a secure connection is established between the MME and/or S-GW and an H(e)NB GW; and a secure connection is established between the H(e)NB GW and the SeGW.

Preferably, the secure connection established between the MME and/or S-GW and the H(e)NB GW includes at least one of the following: an IPsec tunnel, a TLS tunnel, an NDS/IP.

Preferably, the secure connection established between the H(e)NB GW and the SeGW includes one of the following: an NDS/IP, combination of the H(e)NB GW and the SeGW.

Preferably, when the secure connection established between the MME and/or S-GW and the SeGW does not pass through the H(e)NB GW, the method further includes that: a secure connection is established between the MME and/or S-GW and the H(e)NB GW; and a secure connection is established between the H(e)NB GW and the SeGW.

Preferably, the secure connection which is established between the MME and/or S-GW and the SeGW, and does not pass through the H(e)NB GW includes at least one of the following: an IPsec tunnel, a TLS tunnel, an NDS/IP.

Preferably, after the secure connection is established between the SeGW and the H(e)NB, the method further includes: the SeGW and the H(e)NB performs authentication.

Preferably, the secure connection includes at least one of the following: data source authentication, confidentiality protection, integrity protection, anti-replay protection.

Preferably, security protection is provided, via two and/or one secure connection(s), for the connection processing between the MME and/or S-GW and the H(e)NB.

The implementation process of the embodiment of the present invention is described below in details with reference to the examples.

Fig. 5 shows a flowchart of the connection processing method according to a preferred embodiment of the present invention. As shown in Fig. 5, the method includes the following Steps S502-S514.

Step S502, an IPsec tunnel and/or TLS tunnel is established between an MME and/or S-GW and an HeNB GW.

Step S504, a secure connection is established between the HeNB GW and an SeGW, wherein this secure connection may be the NDS/IP, or the combination of the H(e)NB GW and the SeGW.

Step S506, a secure connection is established between the MME and/or S-GW and the SeGW, wherein this secure connection may be formed by the secure connection between the MME and/or S-GW and the H(e)NB GW and the secure connection between the H(e)NB GW and the SeGW, or may be another IPsec tunnel and/or TLS tunnel.

Step S508, mutual authentication is implemented between the HeNB and the SeGW, and a secure connection is established between the HeNB and the SeGW.

Step S510, it is judged whether the data transmission between the MME and/or S-GW and the HeNB is implemented with security protection via two secure connections, if yes, Step S512 is implemented, otherwise, Step S514 is implemented.

Step S512, the data transmission between the MME and/or S-GW and the HeNB is separately protected, namely, is implemented with security protection via two security connections.

Step S514, the data transmission between the MME and/or S-GW and the HeNB is protected via the same secure connection, namely, is implemented with security protection via one secure connection.

It should be noted that, the security protection in Steps S512-S514 may be data source authentication and/or confidentiality protection and/or integrity protection and/or anti-replay protection. The secure connection(s) used for protecting the data transmission between the H(e)NB and the MME and/or S-GW can be IPsec tunnel(s) and/or TLS tunnel(s).

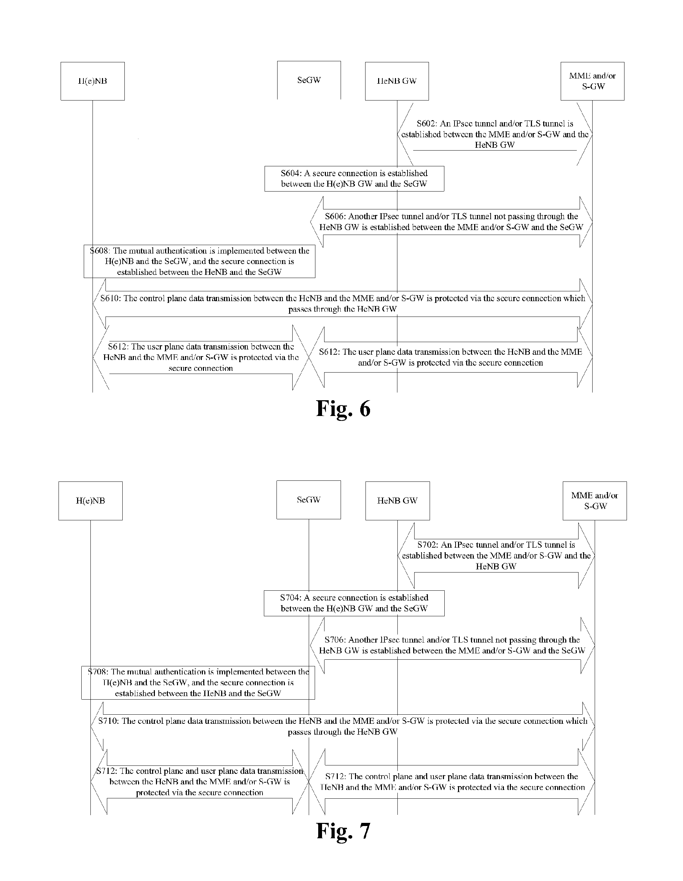

Fig. 6 shows an interactive flowchart of the connection processing method according to a preferred embodiment 1 of the present invention. As shown in Fig. 6, the method includes the following Steps S602-S612.

Step S602, an IPsec tunnel and/or TLS tunnel is established between an MME and/or S-GW and an H(e)NB GW.

Step S604, a secure connection is established between the H(e)NB GW and an SeGW, wherein this secure connection may be an NDS/IP, or the combination of the H(e)NB GW and the SeGW.

Step S606, a secure connection is established between the MME and/or S-GW and the SeGW, wherein this secure connection is another IPsec tunnel and/or TLS tunnel, and does not pass through the H(e)NB GW.

Step S608, mutual authentication is implemented between the H(e)NB and the SeGW, and a secure connection is established between the H(e)NB and the SeGW.

Step S610, control plane data transmission between the H(e)NB and the MME and/or S-GW is protected by the secure connection which passes through the H(e)NB GW.

Step S612, user plane data transmission between the H(e)NB and the MME and/or S-GW is protected by the secure connection which does not pass through the H(e)NB GW.

It should be noted that, the security protection in the Steps S610-S612 may be data source authentication and/or confidentiality protection and/or integrity protection and/or anti-replay protection. The security connection for protecting the data transmission between the H(e)NB and the MME and/or S-GW may be the IPsec tunnel and/or the TLS tunnel.

Fig. 7 shows an interactive flowchart of the connection processing method according to a preferred embodiment 2 of the present invention. As shown in Fig. 7, the method includes the following Steps S702-S712.

Step S702, an IPsec tunnel and/or TLS tunnel is established between an MME and/or S-GW and an H(e)NB GW.

Step S704, a secure connection is established between the H(e)NB GW and an SeGW, wherein this secure connection may be an NDS/IP or the combination of the H(e)NB GW and the SeGW.

Step S706, a secure connection is established between the MME and/or S-GW and the SeGW, wherein this secure connection is another IPsec tunnel and/or TLS tunnel, and does not pass through the H(e)NB GW.

Step S708, mutual authentication is implemented between the H(e)NB and the SeGW, and a secure connection is established between the H(e)NB and the SeGW.

Step S710, control plane data transmission between the H(e)NB and the MME and/or S-GW is protected by the secure connection which passes through the H(e)NB GW.

Step S712, control plane data transmission and user plane data transmission between the H(e)NB and the MME and/or S-GW is protected by the secure connection which does not pass through the H(e)NB GW.

It should be noted that, the security protection in the Steps S710-S712 may be data source authentication and/or confidentiality protection and/or integrity protection and/or anti-replay protection. The security connection for protecting the data transmission between the H(e)NB and the MME and/or S-GW may be an IPsec tunnel and/or an TLS tunnel.

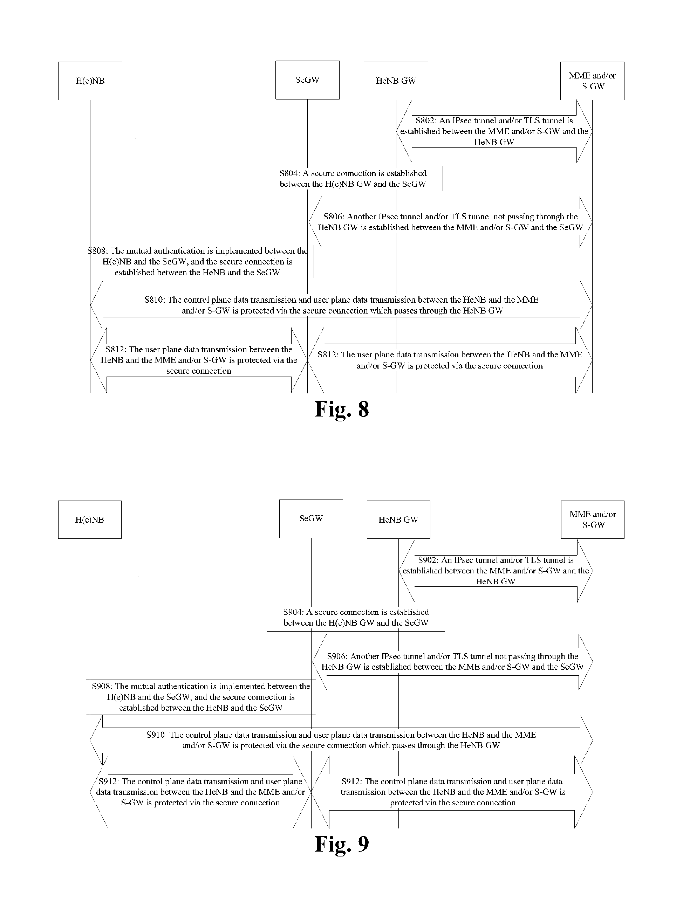

Fig. 8 shows an interactive flowchart of the connection processing method according to a preferred embodiment 3 of the present invention. As shown in Fig. 8, the method includes the following Steps S802-S812.

Step S802, an IPsec tunnel and/or TLS tunnel is established between an MME and/or S-GW and an HeNB GW.

Step S804: a secure connection is established between the H(e)NB GW and an SeGW, wherein this secure connection may be an NDS/IP or the combination of the H(e)NB GW and the SeGW.

Step S806: a secure connection is established between the MME and/or S-GW and the SeGW, wherein this secure connection is another IPsec tunnel and/or TLS tunnel, and does not pass through the H(e)NB GW.

Step S808: mutual authentication is implemented between the H(e)NB and the SeGW, and the secure connection is established between the H(e)NB and the SeGW.

Step S810: control plane data transmission and user plane data transmission between the H(e)NB and the MME and/or S-GW is protected via the secure connection which passes through the H(e)NB GW.

Step S812: user plane data transmission between the H(e)NB and the MME and/or S-GW is protected via the secure connection which does not pass through the H(e)NB GW.

It should be noted that, the security protection in the Steps S810-S812 may be data source authentication and/or confidentiality protection and/or integrity protection and/or anti-replay protection. The security connection for protecting the data transmission between the H(e)NB and the MME and/or S-GW may be an IPsec tunnel and/or a TLS tunnel.

Fig. 9 shows an interactive flowchart of the connection processing method according to a preferred embodiment 4 of the present invention. As shown in Fig. 9, the method includes the following Steps S902-S912.

Step S902, an IPsec tunnel and/or TLS tunnel is established between an MME and/or S-GW and an H(e)NB GW.

Step S904: a secure connection is established between the H(e)NB GW and an SeGW, wherein this secure connection may be an NDS/IP or the combination of the H(e)NB GW and the SeGW.

Step S906: a secure connection is established between the MME and/or S-GW and the SeGW, wherein this secure connection is another IPsec tunnel and/or TLS tunnel, and does not pass through the H(e)NB GW.

Step S908: mutual authentication is implemented between the H(e)NB and the SeGW, and the secure connection is established between the H(e)NB and the SeGW.

Step S910: control plane and user plane data transmission between the H(e)NB and the MME and/or S-GW is protected via the secure connection which passes through the H(e)NB GW.

Step S912: control plane and user plane data transmission between the H(e)NB and the MME and/or S-GW is protected via the secure connection which does not pass through the H(e)NB GW.

It should be noted that, the security protection in the Steps S910-S912 may be data source authentication and/or confidentiality protection and/or integrity protection and/or anti-replay protection. The security connection for protecting the data transmission between the H(e)NB and the MME and/or S-GW may be an IPsec tunnel and/or a TLS tunnel.

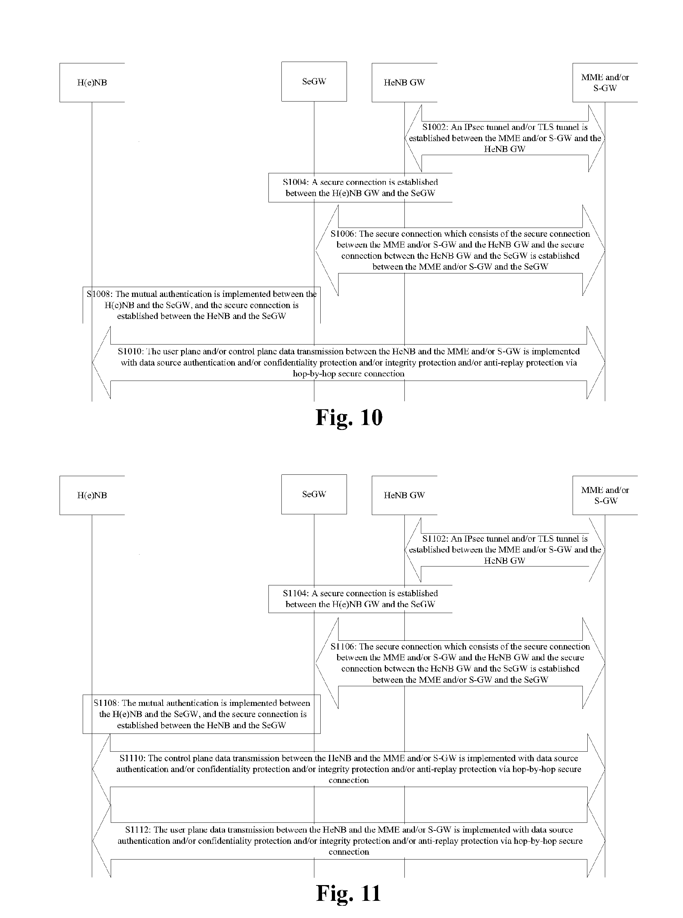

Fig. 10 shows an interactive flowchart of the connection processing method according to a preferred embodiment 5 of the present invention. As shown in Fig. 10, the method includes the following Steps S1002-S1010.

Step S1002, an IPsec tunnel and/or TLS tunnel is established between an MME and/or S-GW and an H(e)NB GW.

Step S1004: a secure connection is established between the H(e)NB GW and an SeGW, wherein this secure connection may be an NDS/IP or the combination of the H(e)NB GW and the SeGW.

Step S1006: a secure connection is established between the MME and/or S-GW and the SeGW, wherein this secure connection can be formed by the secure connection between the MME and/or S-GW and the H(e)NB GW and the secure connection between the H(e)NB GW and the SeGW.

Step S1008: mutual authentication is implemented between the H(e)NB and the SeGW, and the secure connection is established between the H(e)NB and the SeGW.

Step S1010: user plane and/or control plane data transmission between the H(e)NB and the MME and/or S-GW is implemented with security protection via a hop-by-hop secure connection.

It should be noted that, the security protection in the Step S1010 may be data source authentication and/or confidentiality protection and/or integrity protection and/or anti-replay protection. The security connections for protecting the data transmission between the H(e)NB and the MME and/or S-GW may be the IPsec tunnels and/or the TLS tunnels.

Fig. 11 shows an interactive flowchart of the connection processing method according to a preferred embodiment 6 of the present invention. As shown in Fig. 11, the method includes the following Steps S1102-S1112.

Step S 1102, an IPsec tunnel and/or TLS tunnel is established between an MME and/or S-GW and an H(e)NB GW.

Step S1104: a secure connection is established between the H(e)NB GW and an SeGW, wherein this secure connection may be an NDS/IP or the combination of the H(e)NB GW and the SeGW.

Step S 1106: a secure connection is established between the MME and/or S-GW and the SeGW, wherein this secure connection can be formed by the secure connection between the MME and/or S-GW and the H(e)NB GW and the secure connection between the H(e)NB GW and the SeGW.

Step S1108: mutual authentication is implemented between the H(e)NB and the SeGW, and the secure connection is established between the H(e)NB and the SeGW.

Step S1110: control plane data transmission between the H(e)NB and the MME and/or S-GW is implemented with security protection via the hop-by-hop secure connection.

Step S1112, this security protection may be data source authentication and/or confidentiality protection and/or integrity protection and/or anti-replay protection.

The user plane data transmission between the H(e)NB and the MME and/or S-GW is implemented with security protection via a hop-by-hop secure connection. This secure protection may be data source authentication and/or confidentiality protection and/or anti-replay protection. The secure connections for protecting the data transmission between the H(e)NB and the MME and/or S-GW may be the IPsec tunnels and/or the TLS tunnels.

It should be noted that, the steps shown in the flowcharts of the drawings can be executed by a computer system, such as a group of computers which can execute the instructions, in addition, although the logic sequences are shown in the flowchart, the shown or described steps can be executed according to different sequences in some cases.

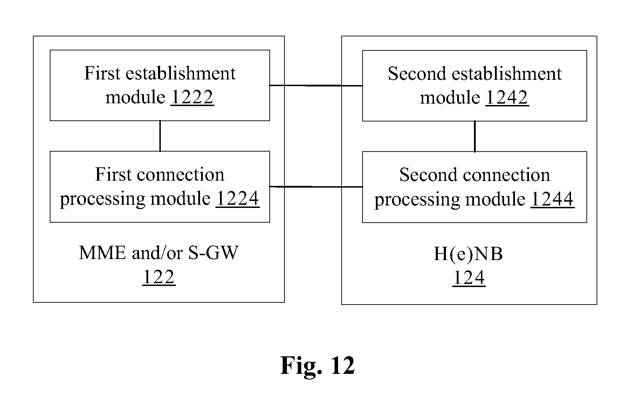

An embodiment of the present invention provides a connection processing system, which can be used for realizing the above connection processing method. Fig. 12 shows a structure diagram of the connection processing system according to the embodiment of the present invention. As shown in Fig. 12, the connection processing system includes an MME and/or S-GW 122 and an H(e)NB 124, wherein the MME and/or S-GW 122 includes a first establishment module 1222 and a first connection processing module 1224; the H(e)NB 124 includes a second establishment module 1242 and a second connection processing module 1244. The system is described below in details.

The first establishment module 1222 is configured to establish a secure connection with the H(e)NB 124; the first connection processing module 1224 is coupled with the first establishment module 1222, and is configured to protect a connection between the MME and/or S-GW 122 and the H(e)NB 124 via the secure connection established by the first establishment module 1222.

The second establishment module 1242 is configured to establish a secure connection with the MME and/or S-GW 122; the second connection processing module 1244 is coupled with the second establishment module 1242, and is configured to protect the connection between the MME and/or S-GW 122 and the H(e)NB 124 via the secure connection established by the second establishment module 1242.

Specifically, the second establishment module 1242 is configured to establish the secure connection with the first establishment module 1222 in the MME and/or S-GW 122; the second connection processing module 1244 is connected to the second establishment module 1242, and is configured to protect the connection between the first connection processing module 1224 and the second connection processing module 1244 in the MME and/or S-GW 122 via the secure connection established by the second establishment module 1242.

It should be noted that, the connection processing system described in the device embodiment is corresponding to the above method embodiment, the specific implementation process has been described in details in the above method embodiment, and thus is not repeated.

In conclusion, a connection processing method and system is provided according to the above embodiments of the present invention. By establishing the secure connection between the H(e)NB and the MME and/or S-GW, and using this secure connection to implement connection processing, the problem that the S1 interface between the H(e)NB and the MME and/or S-GW is not protected is solved, such that the reliability and security of the data transmission mechanism of the H(e)NB system can be increased, the security defects of the H(e)NB system can be solved, and the security performance of the H(e)NB system can be improved.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

### Industrial Applicability

The technical solution of the present invention has industrial applicability. By establishing the secure connection between the H(e)NB and the MME and/or S-GW, and using this secure connection to implement connection processing, the problem that the S1 interface between the H(e)NB and the MME and/or S-GW is not protected is solved, such that the reliability and security of the data transmission mechanism of the H(e)NB system can be increased, the security defects of the H(e)NB system can be solved, and the security performance of the H(e)NB system can be improved.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A connection processing method, **characterized by** comprising:
establishing a secure connection between a Mobility Management Entity (MME) and/or Serving Gateway (S-GW) and a Home (Evolved) NodeB (H(e)NB);
protecting a connection between the MME and/or S-GW and the H(e)NB via the secure connection.

2. The method according to claim 1, **characterized in that** establishing the secure connection between the MME and/or S-GW and the H(e)NB comprises:
establishing the secure connection between the MME and/or S-GW and a Security Gateway (SeGW);
establishing the secure connection between the SeGW and the H(e)NB.

3. The method according to claim 2, **characterized in that** establishing the secure connection between the MME and/or S-GW and the SeGW comprises:
establishing the secure connection between the MME and/or S-GW and an H(e)NB Gateway (H(e)NB GW);
establishing the secure connection between the H(e)NB GW and the SeGW.

4. The method according to claim 3, **characterized in that** the secure connection established between the MME and/or S-GW and the H(e)NB GW comprises at least one of the following:
an Internet Protocol Security (IPsec) tunnel, a Transport Layer Security (TLS) tunnel, a Network Domain Security/Internet Protocol (NDS/IP).

5. The method according to claim 3, **characterized in that** the secure connection established between the H(e)NB GW and the SeGW comprises one of the following:
an NDS/IP, combination of the H(e)NB GW and the SeGW.

6. The method according to claim 2, **characterized in that** when the secure connection established between the MME and/or S-GW and the SeGW does not pass through the H(e)NB GW, the method further comprises:
establishing the secure connection between the MME and/or S-GW and the H(e)NB GW;
establishing the secure connection between the H(e)NB GW and the SeGW.

7. The method according to claim 6, **characterized in that** the secure connection which is established between the MME and/or S-GW and the SeGW, and does not pass through the H(e)NB GW comprises at least one of the following:
an IPsec tunnel, a TLS tunnel, an NDS/IP.

8. The method according to claim 2, **characterized in that** after establishing the secure connection between the SeGW and the H(e)NB, the method further comprises:
the SeGW and the H(e)NB performing authentication.

9. The method according to any one of claims 1 to 8, **characterized in that** the secure connection comprises at least one of the following:
data source authentication, confidentiality protection, integrity protection, anti-replay protection.

10. A connection processing system, **characterized by** comprising a Mobility Management Entity (MME) and/or Serving Gateway (S-GW) and a Home (Evolved) NodeB (H(e)NB), wherein
the MME and/or S-GW comprises:
a first establishment module, configured to establish a secure connection with the H(e)NB;
a first connection processing module, configured to protect a connection between the MME and/or S-GW and the H(e)NB via the secure connection;
the H(e)NB comprises:
a second establishment module, configured to establish the secure connection with the MME and/or S-GW;
a second connection processing module, configured to protect the connection between the MME and/or S-GW and the H(e)NB via the secure connection.
